# FASCICULE DE BREVET EUROPEEN

(11) **EP 1 654 927 B1**
(45) Date de publication et mention de la délivrance du brevet: **09.03.2016**
(21) Numéro de dépôt: 05370034.0
(22) Date de dépôt: 03.11.2005
(51) Int. Cl.: A01G 31/00

(54) **Procédé de culture et de préparation pour obtenir un émincé de légumes**
Pflanzverfahren und Herstellungsverfahren zum Erhalt von Gemüsegeschnetzeltem
Process of planting and preparation to obtain vegetables cut into stripes

(30) Priorité: 03.11.2004 FR 0411720
(43) Date de publication de la demande: 10.05.2006
(73) Titulaire: Leclere, Pascal, 80360 Sailly-Saillisel (FR)
(72) Inventeur: Leclere, Pascal, 80360 Sailly-Saillisel (FR)
(74) Mandataire: Boubal, Denis Henri Jacques

(56) Documents cités:
- EP-A- 0 505 950
- FR-A- 2 626 146
- US-A- 5 301 577

## Description

La présente invention concerne un dispositif de coupe conçu pour la mise en oeuvre d'un procédé de culture et de préparation pour obtenir un émincé de légumes, dont la hampe et/ou les feuilles présentent une forte sensibilité à l'oxydation, tels que notamment les ondives.

Il est connu que, lors du traitement et de la préparation d'endives, celles-ci subissent un rougissement. Ce rougissement est du à une oxydation, catalysée par des enzymes appelées polyphénoloxydase, des composés phénoliques endogènes par l'oxygène moléculaire où les premiers produits de réaction sont les quinones. Les quinones se condensent ensuite rapidement pour former des polymères de haute masse moléculaire.

Cette oxydation n'a lieu cependant qu'après uno décompartimentation cellulaire, qui arrive lors du traitement et de la préparation des produits, notamment lors de la coupe des endives, permettait alors la mise en contact du substrat phénolique, présent dans les vacuoles dos cellules, et du système enzymatique, normalement lié aux membranes plastidiales.

Actuellement, afin d'éviter les problèmes liés à l'oxydation, les légumes et, notamment les endives, sont traités avec des solutions acides contenant des agents antioxydation, tels que le chlore, le dioxyde de soufre ou l'ascorbate de sodium.

Bien que très répandue, un tel traitement présente de nombreux inconvénients, notamment liés aux problèmes toxicologiques posés par l'emploi de certains produits chimiques, à la modification des qualités gustatives qu'elle entraîne et au prix de certains produits antioxydation.

Cela étant, on connaît divers dispositifs de coupe, tels que ceux décrits dans les documents US 5.301.177 ou FR 2.626.146. Cependant, de tels dispositifs n'apportent pas une solution satisfaisante au problème posé par la présente invention.

Le document US 5.301.177 a trait à un procédé et à un dispositif de coupe pour des produits alimentaires en forme de bâton, tels que de la viande ou du fromage. Un tel dispositif se présente sous la forme d'un ensemble de couteaux comprenant deux ou plusieurs lames, chaque lame ayant une surface de coupe courbée en spirale. Un tel dispositif n'est pas structurellement adapté pour couper la hampe et les feuilles de légumes en émincé, tels que notamment des endives.

Le document FR 2.626.146 a trait à une machine de séparation automatique des endives de leurs racines, dans laquelle les endives sont disposées entre deux convoyeurs, perpendiculairement à leur mouvement d'avancement, pour ensuite être coupées latéralement aux convoyeurs à l'aide d'outils de coupe ne pouvant respecter au mieux l'intégrité des légumes.

Le but de la présente invention est de proposer procédé de culture et de préparation pour obtenir un émincé de légumes dont la hampe et/ou les feuilles présentent une forte sensibilité à l'oxydation, tels que notamment les endives, qui pallient les Inconvénients précités, notamment au niveau de l'oxydation.

Un autre but de la présente invention est de proposer un dispositif de coupe conçu pour la mise en oeuvre d'un procédé de culture et de préparation pour obtenir un émincé d'endives, qui permettent d'obtenir des endives avec toutes les qualités visuelles, gustatives et avec beaucoup moins d'amertume.

Un autre but de la présente invention est de proposer un dispositif de coupe conçu pour la mise en oeuvre d'un procédé de culture et de préparation pour obtenir un émincé d'endives, qui permettent d'obtenir des endives émincées, sans détérioration, intégralement lavées,et gardant toute leur fraîcheur.

D'autres buts et avantages de la présente invention apparaîtront au cours de la description qui va suivre, qui n'est donnée qu'à titre indicatif et qui n'a pas pour but de la limiter.

L'invention concerne tout d'abord un dispositif de coupe conçu pour la mise en oeuvre d'un procédé de culture et de préparation pour obtenir un émincé de légumes, dont la hampe et les feuilles présentent une forte sensibilité à l'oxydation, tels que notamment les endives, caractérisé en ce qu'il comprend au moins les étapes successives suivantes:
- on réalise cette culture hydroponique des légumes en alimentant leur racine avec une solution nutritive de nature acide,
- on baisse la température environnante des légumes la veille de la séparation de la racine et de la hampe florale afin de bloquer les fonctions cellulaires de cette dernière,
- on coupe la hampe et les feuilles des légumes en émincé,
- on nettoie les légumes émincés dans un bain d'eau,
- on égoutte et on sèche ou essore par centrifugation les légumes émincés.

Il est d'ailleurs à noter qu'avec un tel procédé, on obtient un produit 100 % naturel.

Le nettoyage des légumes émincés peut également être réalisé dans un bain d'eau osmosée. L'eau osmosée peut améliorer l'efficacité du nettoyage en facilitant la dissolution des enzymes et des composés phénoliques.

L'invention concerne donc un dispositif de coupe, notamment conçu pour couper la hampe et les feuilles des légumes en émincé, tels que des endives, présentant des moyens pour contenir les légumes et des moyens pour les couper en tranche, caractérisé en ce que lesdits moyens pour contenir lesdits légumes sont constitués d'un tapis transporteur et d'un tapis do guidago prenant en sandwich lesdits légumes à couper, dans une position longitudinale, et en ce qu'il est constitué en outre d'au moins un disque de coupe rotatif, présentant un bord de coupe de rayon progressif angulairement en forme de spirale, le légume étant présenté avec son axe longitudinal perpendiculaire au plan dudit disque.

L'invention sera mieux comprise à la lecture de la description suivante, accompagnée des dessins en annexe parmi lesquels :
- la figure 1 illustre schématiquement les différentes phases d'un mode de réalisation de procédé mis en oeuvre par le dispositif de coupe selon l'invention,
- la figure 2 illustre, schématiquement en coupe, un dispositif de coupe des légumes la présente invention,
- la figure 3 illustre schématiquement un disque de coupe rotatif représenté en plusieurs positions selon la présente invention et selon le moment de la coupe,
- la figure 4 Illustre, schématiquement, un dispositif de coupe des légumes avec des moyens pour contenir et transporter lesdits légumes, selon un second mode de réalisation de la présente invention.

L'invention concerne tout d'abord un dispositif de coupe conçu pour la mise en oeuvre d'un procédé de culture et de préparation pour obtenir un émincé de légumes, dont la hampe ou les feuilles présentent une forte sensibilité à l'oxydation, tels que notamment les endives. Le procédé comprend au moins les étapes successives suivantes :
- on réalise cette culture hydroponique des légumes en alimentant leur racine avec une solution nutritive de nature acide,
- on baisse la température environnante des légumes la veille de la séparation de la racine et de la hampe florale afin de bloquer les fonctions cellulaires de cette dernière,

- on coupe la hampe et les feuilles des légumes en émincé,
- on nettoie les légumes émincés dans un bain d'eau,
- on égoutte et on sèche ou on essore par centrifugation les légumes émincés.

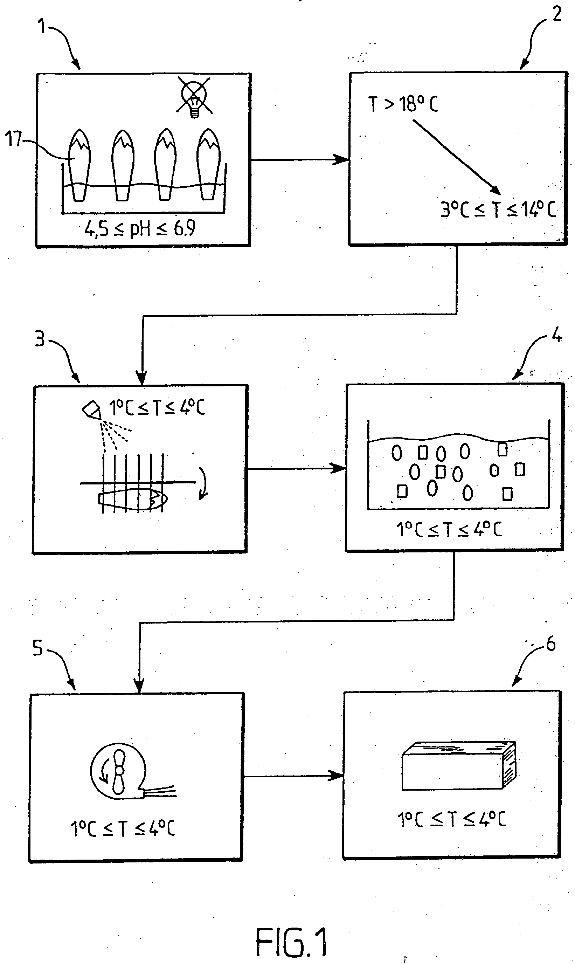

Comme illustré à la figure 1, le procédé de traitement et de préparation pour obtenir un émincé de légumes commence à partir d'une première étape, repérée 1 à la figure 1, appelée forçage.

Par forçage, on entend toute opération qui consiste à mettre une plante dans des conditions artificielles de milieu, de température et éventuellement d'éclairement, ou d'obscurité afin d'obtenir une production à contre-saison.

Un objectif du procédé est de minimiser la destruction cellulaire et ainsi éviter le contact entre les enzymes phénoloxydases et les composés phénoliques afin d'éviter les réactions d'oxydation et les subséquents rougissements des légumes.

Le procédé commence à partir du forçage. La racine lors de sa période de plus ou moins 21 jours de forçage est alimentée en hydroponie avec des éléments minéraux ayant un pH le plus bas possible.

Par hydroponie, on entend toute culture de végétaux sur support artificiel avec alimentation par des solutions nutritives.

La veille de la séparation de la racine et de la hampe florale, appelée cassage, les bacs d'endives doivent être mis au froid, en eau et en air, tels qu'illustrés schématiquement à l'étape 2, figure 1. Le but est de bloquer progressivement les fonctions cellulaires de la plante, telles que les échanges intra et extracellulaires, dont notamment la photosynthèse. En effet, l'abaissement de la température conduit à une phase dite de « latence ou de zéro de végétation cellulaire ».

Le jour du cassage, le produit doit être travaillé le plus vite possible afin de limiter le dessèchement et le réchauffement de l'endive entraînant ainsi une réactivation cellulaire et le rougissement des coups superficiels.

Une fois les endives coupées au moyen d'un dispositif de coupage tel que décrit par la suite, et tel qu'illustré à l'étape 3 de la figure 1, on soumet les légumes coupés à une extraction au moyen d'un jet d'eau osmosée à basse pression pour ne pas abîmer les cellules. Les endives tombent ensuite dans un bac de pré-nettoyage, étape 4,figure 1, enlevant toutes les grosses particules indésirables, telles que de la terre, bouts de feuilles noires, etc, et dans le même temps les enzymes responsables du rougissement.

Un deuxième bain d'eau osmosée sera plus spécifique au nettoyage final des cellules coupées, enlevant les enzymes, et de nettoyage intégral de toute la surface de l'endive.

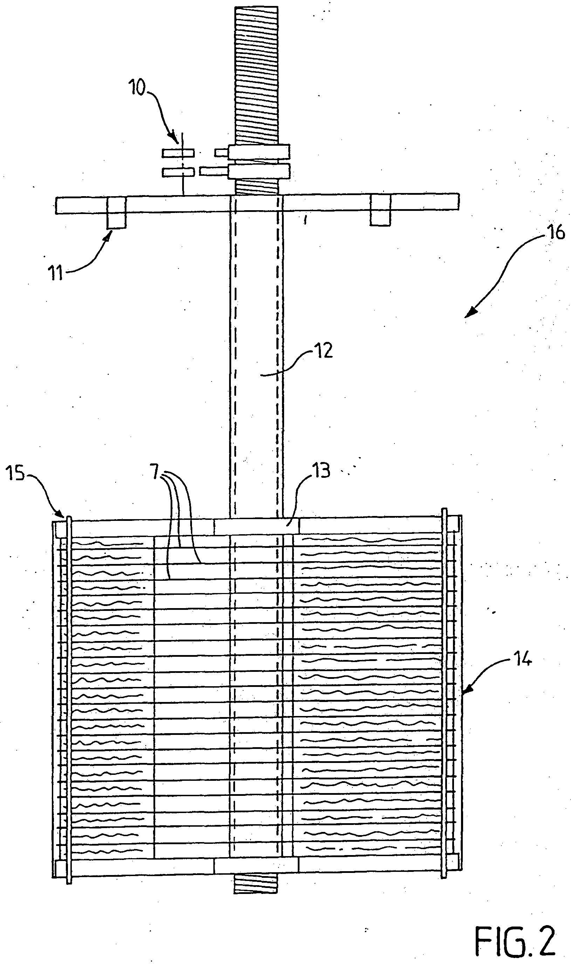

L'émincé d'endives est ensuite ressorti du bain puis posé sur une table vibrante non illustrée, en forme d'entonnoir, et sur laquelle seront séparées les parties indésirables comme l'axe ou bouts de feuilles déclassées à la suite d'un coup ou d'un noircissement. Les vibrations vont faire tomber les émincés d'endives sur un tapis à mailles afin de se faire égoutter et sécher délicatement par un système de ventilation monté sur variateur, et tel qu'illustré schématiquement à l'étape 5, figure 2. Le séchage peut être effectué par essorage centrifuge.

Lors du conditionnement du produit en barquettes, étape 6, figure 1, un très léger vide d'air sans réinjection de gaz, peut être effectué avant la mise de l'opercule qui permettra de garder un produit naturellement conservé avec une date limite de consommation (D.L.C.) minimum de dix jours.

Selon un mode particulier du procédé, les légumes sont alimentés en salle noire et avec une solution nutritive présentant un pH entre 4,5 et 6,9.

Tel que déjà mentionné précédemment, les racines des légumes doivent être alimentées avec des solutions présentant un pH le plus bas possible, et notamment entre 4,5 et 6,9. Lors du développement du chicon, la racine pourra alors se charger en pH acide qui limitera la résistance cellulaire des liaisons H contribuant à la déformation cellulaire lors de la future coupe, ce qui permettra d'éviter la déchirure et l'éclatement des cellules à proximité et qui, dans la suite du processus permet de limiter le contact entre les enzymes et les substrats phénoliques, et, par conséquent, le rougissement des endives.

Selon un autre mode particulier du procédé, les légumes doivent être mis au froid, en eau et en air, tel qu'illustré schématiquement à l'étape 2, figure 1, à une température comprise entre 3 °C et 14 °C. Un écart de température aussi important s'explique par la différence entre le bord et le milieu du bac, qui contient les légumes, au coeur de l'endive et selon le seuil de tolérance de descente rapide au froid suivant la variété ou la saison. Dans le principe, il faut descendre la température le plus bas possible en gradient positif, sans apporter de problèmes de borduration ou ouverture. Tel que mentionné précédemment, en baissant la température, on bloque progressivement les fonctions cellulaires de la plante et, notamment, la photosynthèse.

Selon un mode particulier du procédé, les légumes sont coupés à une faible vitesse de rotation afin d'éviter les brûlures cellulaires.

On a obtenu de bons résultats avec une vitesse de rotation permettant de couper 1 cm de légume par 5 secondes.

Le couteau utilisé pour la coupe des légumes peut-être mouillé en continu, sur chaque face, avec de l'eau osmosée à une température comprise entre 1 et 4 °C, afin d'éviter le dépôt d'enzymes responsables de l'oxydation.

Par eau osmosée, on entend toute eau purifiée sans l'ajout de produits chimiques. Le procédé consiste à presser l'eau à travers une membrane semi-perméable qui ne laisse passer que les molécules d'eau tout en retenant les autres éléments indésirables, tels que les nitrates.

Selon une variante du procédé, on bloque les fonctions cellulaires de la hampe florale des légumes, en outre, avec au moins un trempage dans un bain d'eau osmosée à une température comprise entre 1 et 4 °C. Le temps de trempage de l'émincé sera en fonction de la quantité de produit immergé et de son état de propreté.

Comme montrés à la figure 1, étape 4, les bains de nettoyage en eau osmosée sont à une température comprise entre 1 et 4 °C et un pH compris entre 4,5 et 6,9 dans une eau en mouvement continu par pression pour un brassage horizontal, créé par une pompe électrique. Un réseau de canalisation percé de petits trous servira à la circulation et à l'évacuation du flux d'air pneumatique pour un brassage vertical. Ce système va permettre de séparer, par densité, le produit fraîchement coupé, en partie axe et partie feuille et la dilution des composés phénoliques provenant des cellules coupées afin de les rendre inactifs.

La régénération de l'eau par une perte naturelle en continu sera variable en fonction de l'efficacité du blocage cellulaire qui aura été effectué dans les étapes précédentes, et qui jouera directement sur les taux de concentration d'enzymes. Cette perte permettra de supprimer également tous les problèmes de développement bactérien d'une eau sale.

On a obtenu de bons résultats avec un pourcentage de renouvellement d'eau entre 20 à 70 % pour 100 kg d'endives émincées.

Selon un autre mode particulier du procédé, on égoutte et on sèche les légumes coupés sous un flux d'air et à une température comprise entre 1 et 4 °C, tel qu'illustré à l'étape 5, figure 1.

Comme illustré à la figure 1, étape 5, les légumes coupés peuvent être séchés au moyen d'un système de ventilation monté sur variateur, ventilant par le dessus de l'air entre 1 et 4 °C, qui sera contrôlé en continu afin de régler soit la ventilation, soit l'avancement du tapis monté sur variateur (non illustré). Ce système permet de supprimer tout choc du produit par pression et écrasement des cellules qui pourrait entraîner par la suite un rougissement.

La ventilation se fera sur deux faces à la suite d'un retournement par transfert d'un tapis sur un autre d'une très faible hauteur.

Selon le procédé, les légumes sont conditionnés à une température comprise entre 1 et 4 °C, sous ambiance hydrométrique contrôlée et dans un emballage légèrement poreux, étape 6, figure 1.

Le conditionnement des légumes sous une ambiance hydrométrique contrôlée limite le dessèchement tissulaire et permet de garder toute la fraîcheur et les saveurs organoleptiques.

Selon un mode particulier de réalisation, le conditionnement des légumes peut être effectué sous atmosphère modifié par adjonction d'un gaz inerte, tel que l'azote.

La présente invention concerne tout d'abord donc un dispositif de coupe, notamment conçu pour couper la hampe et les feuilles des légumes en émincé, tels que des endives, présentant des moyens pour contenir les légumes et des moyens pour les couper en tranches afin d'obtenir ledit émincé de légumes.

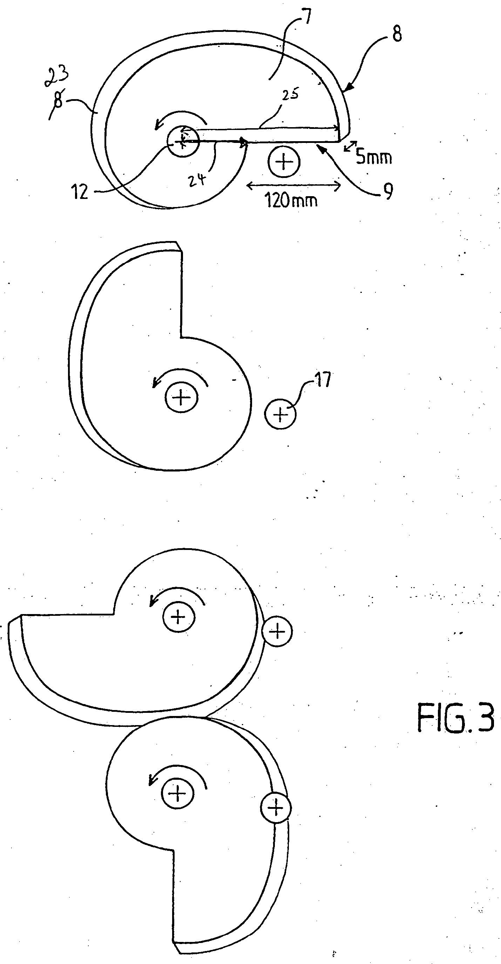

Le dispositif est constitué en outre d'au moins un disque 7 de coupe rotatif, présentant un bord de coupe de rayon progressif angulairement en forme de spirale, comme illustré à la figure 3, l'endive 17 étant notamment, présentée avec son axe longitudinal perpendiculaire au plan du disque 7.

La coupe de l'endive 17 a une grande importance dans l'aspect esthétique et dans sa conservation. Il est impératif d'obtenir une coupe, la plus fine possible, et ceci grâce à un couteau 8 de conception spécifique. Tel qu'illustré à la figure 3, le couteau présente en outre un biseau 23 de 10 mm et, plus particulièrement de 5 mm, dans un seul côté, qui donnera l'équivalence de la précision d'un tranchant d'une lame de rasoir et ne coupera que les cellules se trouvant dans le prolongement virtuel de la future coupe.

Selon un autre mode de réalisation, le couteau peut présenter un biseau sur les deux faces.

Pour ne pas forcer le disque 7 à une déformation incontrôlée, il faut que l'endive 17 soit calée correctement dans l'accessoire de coupe correspondant à son diamètre.

On a obtenu de bons résultats avec une épaisseur de disque 7, dit miroité, inférieur ou égal à 0,8 mm et, plus particulièrement compris entre 0,5 et 0,8 mm, de façon à ne pas détruire par éclatement, suite à la pression, des cellules se trouvant juste derrière celles coupées à cause de l'épaisseur cumulée des lames, avec une longueur de 264 mm, avec une largeur de 188 mm et une partie 9 coupante de 120 mm.

Selon la présente invention, le disque 7 dudit couteau 8 permet de couper un centimètre pour un développement d'environ 4,4 à 5 cm.

Par ailleurs, il est à noter que l'on pourra lubrifier le ou les disques de coupe 7, notamment à l'aide de jets d'eau osmosée, pendant la phase de coupe.

Selon un premier mode particulier de réalisation, illustré à la figure 2, ledit dispositif est constitué d'une pluralité de disques 7 disposés parallèles superposés sur un même arbre de rotation, et espacés régulièrement, notamment à l'aide d'entretoises. Lesdites entretoises définissent l'épaisseur de la coupe de l'émincé d'endives.

Par ailleurs, le dispositif de coupe peut comporter en outre, un support de cellules magnétiques 10 qui permettent de contrôler la vitesse de rotation du couteau, une buse 11 pour un jet d'eau, un tube de force 12, un écrou 13 de blocage des disques 7, un carter 14 et une fixation accessoire 15 permettent de guider la périphérie des disques 7.

Selon un second mode de réalisation, on a obtenu également de bons résultats avec un biseau 23 entre 10 et 15 mm. Selon ce mode de réalisation, le disque 7 dudit couteau 8 permet de couper un centimètre pour un développement de longueur périphérique du disque d'environ 6 cm.

A titre d'exemple non limitatif, le disque 7 peut être en acier trempé poli, type inox alimentaire Z40C13.

On a obtenu de bons résultats avec un disque 7 de rayon progressif, avec un rayon 24 minimum de 80 mm et un rayon 25, après une rotation de 360 °, maximum de 230 mm, et une partie 9 différentielle de 150 mm tel qu'illustré à la figure 3.

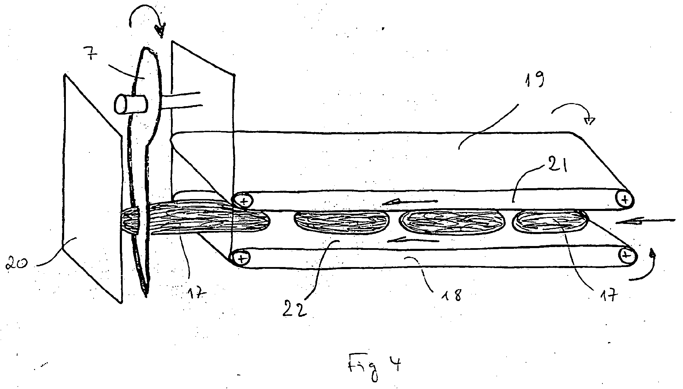

Selon la présente invention, illustré à la figure 4, lesdits moyens pour contenir lesdits légumes sont constitués d'un tapis transporteur 18 et d'un tapis de guidage 19 , notamment respectivement horizontaux et parallèles, prenant en sandwich lesdits légumes à couper, pour les amener vers au moins un disque 7 de coupe.

Tel que montré à la figure 4, le tapis 18 sert à transporter les légumes et, notamment, l'endive 17, tandis que le tapis 19 de guidage sert à maintenir les endives 17 en place lors de la découpe.

Les tapis 18, 19 sont par exemple constitués par des bandes sans fin motorisées de façon à ce que la bande inférieure 21 du tapis 19 de guidage et la bande supérieure 22 du tapis 18 de transport déplace les endives, prises en sandwich entre les deux bandes 21, 22, dans une position longitudinale, vers l'outil de coupe, en l'occurrence le disque 7. Aussi, les deux tapis tournent en sens inverse.

Le dispositif de coupe selon la présente invention peut en outre présenter un support en butée 20 du produit, tel que montré à la figure 4. Ce support 20 permet de bloquer les légumes lors de leur découpe sans les frotter et il peut présenter différentes formes et dimensions.

L'écart entre la butée 20 et le disque 7 détermine l'épaisseur de la coupe de l'émincé d'endives. De même, on règle la vitesse des tapis en fonction de la vitesse de coupe du disque pour présenter les endives successivement devant le disque de coupe.

Naturellement, d'autres modes de mise en oeuvre, à la portée de l'homme de l'art, auraient pu être envisagés sans pour autant sortir du cadre de l'invention comme défini dans les revendications.

## Revendications

1. Dispositif de coupe (16), notamment conçu pour couper la hampe et les feuilles des légumes en émincé, tels que des endives, présentant des moyens pour contenir les légumes et des moyens pour les couper en tranche, **caractérisé en ce que** lesdits moyens pour contenir lesdits légumes sont constitués d'un tapis transporteur (18) et d'un tapis de guidage (19) prenant en sandwich lesdits légumes à couper, dans une position longitudinale, et on ce qu'il est constitué en outre d'au moins un disque (7) de coupe rotatif, présentant un bord de coupe de rayon progressif angulairement en forme de spirale, le légume (17) étant présenté avec son axe longitudinal perpendiculaire au plan dudit disque (7).

2. Dispositif selon la revendication 1, **caractérisé par le fait que** le disque en spirale (7) permet de couper un centimètre pour un développement d'environ 4,4 à 5 cm.

3. Dispositif selon la revendication 1, **caractérisé par le fait que** le disque en spirale (7) permet de couper un centimètre pour un développement de 6 cm.

4. Dispositif selon la revendication 1, **caractérisé par le fait que** le disque (7) présente une épaisseur inférieure ou égale à 0,8 mm.

5. Dispositif selon la revendication 1, **caractérisé par le fait que** le disque (7) présente un biseau (23) entre 10 et 15 mm.

6. Dispositif selon la revendication 1, **caractérisé par le fait que** le disque (7) présente un biseau (23) de 5 mm d'un seul côté du disque.

7. Dispositif de coupe selon la revendication 1, **caractérisé en ce que** le dispositif est constitué d'une pluralité de disques (7) disposés parallèles régulièrement superposés sur un même arbre de rotation.

## Patentansprüche

1. Schneidvorrichtung (16), die insbesondere entwickelt ist, um den Schaft und die Blätter von fein geschnittenem Gemüse, wie Chicoree, zu schneiden, das Mittel aufweist, um das Gemüse zu beinhalten und Mittel, um es in Scheiben zu schneiden, wobei die Mittel zum Beinhalten des Gemüses aus einem Förderband (18) und einem Führungsband (19) gebildet sind, die das zu schneidende Gemüse in einer Längsposition sandwichartig einschließen, und dadurch, dass es ferner aus mindestens einer rotierenden Schneidscheibe (7) gebildet ist, die eine Schneidkante mit einem spiralförmigen, winkelmäßig zunehmenden Radius aufweist, wobei das Gemüse (17) mit seiner Längsachse senkrecht zur Ebene der Scheibe (7) vorgelegt wird.

2. Vorrichtung nach Anspruch 1, **dadurch gekennzeichnet, dass** die spiralförmige Scheibe (7) ermöglicht, einen Zentimeter auf einer Abwicklung von etwa 4,4 bis 5 cm zu schneiden.

3. Vorrichtung nach Anspruch 1, **dadurch gekennzeichnet, dass** die spiralförmige Scheibe (7) ermöglicht, einen Zentimeter auf einer Abwicklung von etwa 6 cm zu schneiden.

4. Vorrichtung nach Anspruch 1, **dadurch gekennzeichnet, dass** die Scheibe (7) eine Dicke von weniger als oder gleich 0,8 mm aufweist.

5. Vorrichtung nach Anspruch 1, **dadurch gekennzeichnet, dass** die Scheibe (7) eine Schrägfläche (23) von zwischen 10 und 15 mm aufweist.

6. Vorrichtung nach Anspruch 1, **dadurch gekennzeichnet, dass** die Scheibe (7) eine Schrägfläche (23) von 5 mm auf einer einzigen Seite der Scheibe aufweist.

7. Vorrichtung nach Anspruch 1, **dadurch gekennzeichnet, dass** die Vorrichtung aus mehreren Scheiben (7) gebildet ist, die parallel, regelmäßig aufeinanderfolgend auf einer gleichen Drehwelle angeordnet sind.

## Claims

1. Cutting device (16), in particular designed to cut in slivers the stem and leaves of vegetables, such as chicory, having means for containing the vegetables and means for cutting them in slices, **characterised in that** said means for containing said vegetables consist of a conveyor belt (18) and a guide belt (19) sandwiching said vegetables to be cut, in a longitudinal position, and **in that** it further consists of at least one rotary cutting disc (7), having a cutting edge with an angularly progressive radius in the form of a spiral, the vegetable (17) being presented with its longitudinal axis perpendicular to the plane of said disc (7).

2. Device according to claim 1, **characterised by** the fact that the spiral disc (7) makes it possible to cut one centimetre for a development of approximately 4.4 to 5 cm.

3. Device according to claim 1, **characterised by** the fact that the spiral disc (7) makes it possible to cut one centimetre for a development of 6 cm.

4. Device according to claim 1, **characterised by** the fact that the disc (7) has a thickness of less than or equal to 0.8 mm.

5. Device according to claim 1, **characterised by** the fact that the disc (7) has a bevel (23) of between 10 and 15 mm.

6. Device according to claim 1, **characterised by** the fact that the disc (7) has a bevel (23) of 5 mm on only one side of the disc.

7. Cutting device according to claim 1, **characterised in that** the device consists of a plurality of discs (7) disposed parallel and regularly superimposed on the same rotation shaft.
